# EUROPÄISCHE PATENTSCHRIFT

(11) **EP 0 505 823 B1**
(45) Veröffentlichungstag und Bekanntmachung des Hinweises auf die Patenterteilung: **07.12.1994**
(21) Anmeldenummer: 92104081.2
(22) Anmeldetag: 10.03.1992
(51) Int. Cl.: B60R 22/46, B60R 22/18

(54) **Gurtstrafffer in einem Sicherheitsgurtsystem für Fahrzeuge**
Tensioner in a seat belt system for vehicles
Tendeur dans un système de ceinture de sécurité pour véhicules

(30) Priorität: 25.03.1991 DE 4109776
(43) Veröffentlichungstag der Anmeldung: 30.09.1992
(73) Patentinhaber: TRW REPA GMBH, 73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- EP-A- 0 456 853
- DE-A- 4 013 046
- GB-A- 2 220 128
- GB-A- 2 237 180
- US-A- 4 955 638

## Beschreibung

Die Erfindung betrifft einen Gurtstraffer in einem Sicherheitsgurtsystem für Fahrzeuge, mit einem durch einen pyrotechnischen Gasgenerator aktivierbaren Kolben/Zylinder-Linearantrieb, der in einem Stützgehäuse angeordnet ist.

Ein gattungsgemäßer Gurtstraffer ist aus der GB-A-2 220 128 bekannt.

Die Zündung eines pyrotechnischen Gasgenerators in einem Gurtstraffer für Sicherheitsgurtsysteme in Fahrzeugen kann mittels eines elektrischen Zünders erfolgen, der durch eine die Fahrzeugverzögerung auswertende Elektronikzentrale angesteuert wird. Der Aufwand für eine solche Elektronikzentrale und die für jeden einzelnen Gurtstraffer benötigten elektrischen Ansteuerleitungen ist jedoch hoch.

Eine mechanische Auslosung des pyrotechnischen Gasgenerators kann durch einen Ansteuermechanismus erfolgen, der mit einer fahrzeugsensitiven, beweglich gelagerten Trägheitsmasse ausgestattet ist. Ein solcher Ansteuermechanismus hat jedoch einen erheblichen Raumbedarf und kommt daher bei beengten Einbauverhältnissen nicht in Betracht.

Der Erfindung liegt die Aufgabe zugrunde, einen Gurtstraffer der eingangs genannten Art zur Verfügung zu stellen, der bei geringem Raumbedarf und Materialaufwand eine mechanische Zündung des Gasgenerators ermöglicht.

Diese Aufgabe wird bei einem gattungsgemäßen Gurtstraffer erfindungsgemäß dadurch gelöst, daß der Kolben/Zylinder-Linearantrieb an dem Stützgehäuse zwischen einer Ruhestellung und einer Auslösestellung verschwenkbar gelagert ist, daß der Kolben/Zylinder-Linearantrieb eine fahrzeugsensitive Trägheitsmasse bildet, die durch Federvorspannung in Richtung der Ruhestellung belastet und durch verzögerungsbedingte Trägheitskräfte in die Auslösestellung bewegbar ist, daß der Gasgenerator mit einem Schlagzünder versehen ist und daß an dem Stützgehäuse ein federbelastetes Schlagteil gelagert ist, das einen Amboß zum Aufschlagen auf dem Schlagzünder aufweist und durch Auflage an einer Haltefläche des Kolben/Zylinder-Linearantriebs in einer Bereitschaftsstellung gehalten ist. Der Kolben/Zylinder-Linearantrieb umfaßt außer Kolben und Zylinder den Gasgenerator und einen Lagerblock, worin der Zylinder befestigt und der Gasgenerator aufgenommen ist. Die so gebildete Baugruppe weist eine erhebliche Masse auf, die bei dem erfindungsgemäßen Gurtstraffer als fahrzeugsensitive Trägheitsmasse genutzt wird. Durch das Entfallen einer gesonderten Trägheitsmasse können Raumbedarf und Aufwand an Material und Montage gering gehalten werden.

Um eine sichere Zündung zu gewährleisten, muß der Amboß auf dem Schlagzünder mit einem recht hohen mechanischen Impuls aufschlagen. Die hierfür erforderliche mechanische Energie wird durch eine vorgespannte Feder zur Verfügung gestellt. Um die in der vorgespannten Feder gespeicherte mechanische Energie optimal auszunutzen, ist das Schlagteil bei einer bevorzugten Ausführungsform der Erfindung als zweiarmiger Schlaghebel ausgebildet, der an dem Stützgehäuse schwenkbar gelagert ist und an dessen erstem Arm der Amboß angeordnet ist; durch die vorgespannte Feder wird der Schlaghebel im Auslösefalle beschleunigt und mit seinem Amboß gegen den Schlagzünder getrieben. Um den Schlaghebel auf eine möglichst hohe Winkelgeschwindigkeit zu beschleunigen, besitzt dieser eine geringe Masse; ein besonders hoher mechanischer Impuls wird dadurch erreicht, daß ein großer Teil der Masse des Schlaghebels im Bereich seines Ambosses konzentriert ist.

Bei einer besonders vorteilhaften Ausführungsform wird der Schlaghebel durch eine Druckfeder belastet, die zwischen dem Ende des zweiten Hebelarmes und dem Kolben/Zylinder-Linearantrieb abgestützt ist. Die Abstützstelle der Feder am Kolben/Zylinder-Linearantrieb liegt in der Nähe seines Schwenklagers, und zwar auf der vom Schlagzünder abgewandten Seite des Lagerblocks, in dem Zylinder und Gasgenerator angeordnet sind. Auf diese Weise kommt der Druckfeder eine doppelte Funktion zu: Zum einen liefert sie die zur Auslösung des Schlagzünders erforderliche mechanische Energie, und zum anderen belastet sie die durch den Kolben/Zylinder-Linearantrieb gebildete fahrzeugsensitive Trägheitsmasse in ihre Ruhestellung und bestimmt somit die Auslöseschwelle, bei der die Zündung des Gasgenerators erfolgt.

Bei einem Schlagzünder ist es erforderlich, daß der Schlag genau zentrisch auf die Aufschlagfläche geführt wird. Bei der beschriebenen Ausführung des Gurtstraffers sind aber der Schlagzünder, da er Bestandteil der beweglichen fahrzeugsensitiven Trägheitsmasse ist, und der Amboß relativ zueinander beweglich. Um dennoch ein Aufschlagen genau zentrisch auf die Aufschlagfläche des Schlagzünders zu erreichen, ist bei der bevorzugten Ausführungsform der Gasgenerator mit einem seinem Schlagzünder vorgelagerten Schlagübertragungselement versehen, welches in einer Führungsöffnung im Gehäuse des Gasgenerators zur Aufschlagfläche des Schlagzünders ausgerichtet aufgenommen und geführt ist. Dieses Schlagübertragungselement ragt aus dem Gehäuse des Gasgenerators heraus. Es ist vorzugsweise als Stift oder Kugel ausgebildet. Der mit einer stumpfen Aufschlagfläche versehene Amboß muß lediglich auf dem herausragenden Ende des Stiftes oder der Kugel auftreffen; seine Achse kann erheblich von der des Schlagzünders abweichen.

Weitere Merkmale und Vorteile der Erfindung ergeben sich aus der folgenden Beschreibung und aus der Zeichnung, auf die Bezug genommen wird. In der Zeichnung zeigen:
- Fig. 1: eine schematische Perspektivansicht eines Gurtstraffers, der mit einem Gurtaufroller zu einer Baugruppe integriert ist;
- Fig. 2: eine Explosionsansicht des in Fig. 1 gezeigten Gurtstraffers;
- Fig. 3: eine Schnittansicht des in den Figuren 1 und 2 gezeigten Gurtstraffers in Ruhestellung;
- Fig. 4: eine Detailansicht eines Kolben/Zylinder-Linearantriebs für den Gurtstraffer im axialen Schnitt; und
- Fig. 5: eine Schnittansicht des Gurtstraffers analog Fig. 3, jedoch in Auslösestellung.

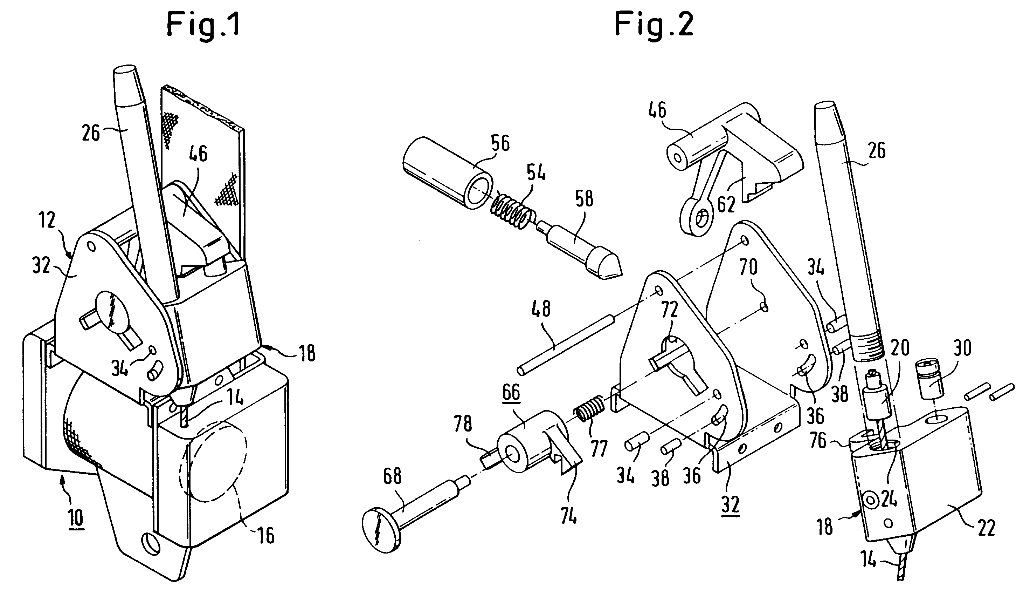

Die in Fig. 1 gezeigte Baugruppe umfaßt einen Gurtaufroller 10 und einen Gurtstraffer 12. Der Gurtstraffer 12 greift in an sich bekannter Weise über ein Zugseil 14 am Umfang einer Seilscheibe 16 an, die mit der Gurtspule des Gurtaufrollers 10 kuppelbar ist. Der Gurtstraffer 12 umfaßt einen Kolben/Zylinder-Linearantrieb 18, dessen Kolben 20 am Ende des Zugseils 14 befestigt ist.

Dieser Kolben/Zylinder-Linearantrieb 18 weist einen Lagerblock 22 mit einer Bohrung 24 auf, in die das eine Ende des Zylinders 26 des Kolben/Zylinder-Linearantriebs 18 eingeschraubt ist. Diese Bohrung 24 steht mit einer Kammer 28 in Verbindung, in welche ein Gasgenerator 30 eingesetzt ist.

Der Lagerblock 22 ist in einem allgemein U-förmigen Stützgehäuse 32 mittels Lagerstiften 34 schwenkbar gelagert. Zwei bogenförmige, einander gegenüberliegende Langlöcher 36, in die jeweils einer von zwei seitlich in den Lagerblock 22 eingesetzten Anschlagstiften 38 eingreift, begrenzen im Zusammenwirken mit diesem die Schwenkbewegung des Kolben/Zylinder-Linearantriebs 18 relativ zu dem Stützgehäuse 32, welches mit dem Gehäuse des Gurtaufrollers 10 fest verbunden ist.

Der Gasgenerator 30 ist an seinem aus dem Lagerblock 22 herausragenden Ende mit einem Schlagzünder versehen. Diesem (herkömmlich ausgebildeten und daher nicht gezeigten) Schlagzünder ist ein Schlagstift 40 vorgelagert, der in einer Führungsbohrung 42 im Gehäuse des Gasgenerators 30 genau koaxial mit dem Schlagzünder des Gasgenerators geführt ist. Das äußere Ende des Schlagstiftes 40 ragt aus der Bodenfläche des Gasgenerators heraus, die von einer an das Gehäuse des Gasgenerators angeformten Schürze 44 umgeben ist.

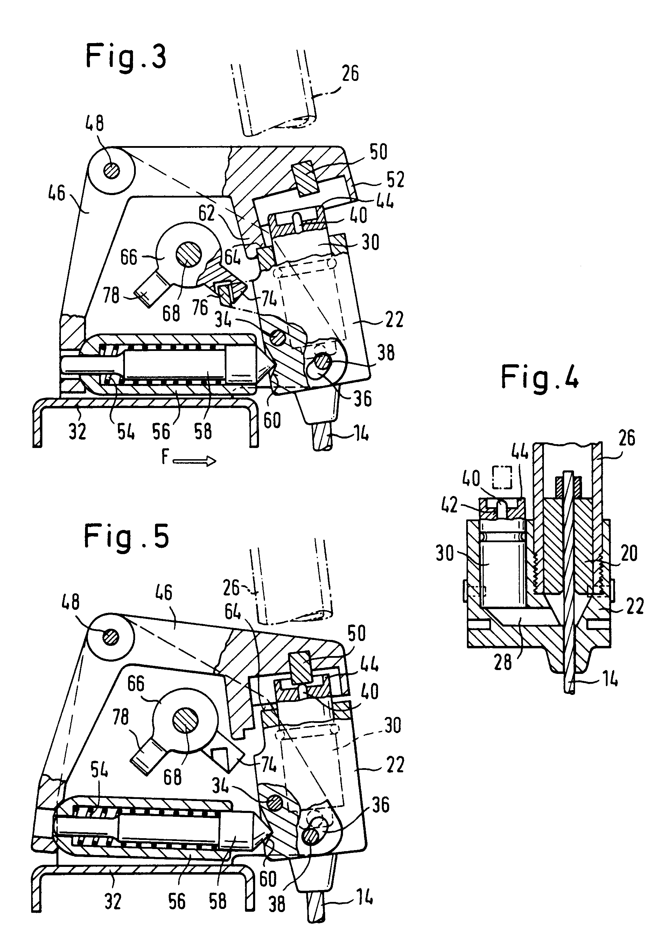

Zwischen den Seitenplatten des Stützgehäuses 32 ist ein zweiarmiger Schlaghebel 46 auf einem Lagerstift 48 schwenkbar gelagert. Am ersten Arm dieses Schlaghebels 46, in dem der größte Teil der Masse dieses Hebels vereinigt ist, befindet sich ein Amboß 50, der eine stumpfe Aufschlagfläche aufweist. Der Amboß 50 ist von einer Schürze 52 umgeben, die - wie aus den Figuren 3 und 5 ersichtlich ist - das mit dem Schlagzünder versehene Ende des Gasgenerators 30 schützend umgreift. Der Schlagstift 40 ist so durch die kombinierte Wirkung der Schürzen 44 und 52 vor unbeabsichtigter Einwirkung von außen, die zu einer Auslösung des Gasgenerators führen könnte, geschützt.

Der Schlaghebel 46 wird durch eine Druckfeder 54 im Sinne einer Bewegung des Ambosses 50 gegen den Schlagstift 40 belastet. Diese Druckfeder 54 ist in einer hohlzylindrischen Führungshülse 56 aufgenommen, die sich mit ihrem einen Ende am freien Ende des zweiten Hebelarms des Schlaghebels 46 abstützt und außer der Druckfeder 54 einen Stößel 58 verschiebbar aufnimmt. Das aus der Führungshülse 56 herausragende Ende des Stößels 58 ist konisch ausgebildet und stützt sich in einer Kerbe 60 am Lagerblock 22 ab. Diese Kerbe 60 ist in geringem Abstand von der Achse der Lagerstifte 34 angeordnet, und zwar auf der von dem Schlagzünder des Gasgenerators 30 abgewandten Seite. Die Druckfeder 54 belastet somit nicht nur den Schlaghebel 46, sondern auch den Lagerblock 22, so daß dieser in einer stabilen Ruhestellung gehalten wird, die durch Anlage der Anschlagstifte 38 an dem einen Ende der Langlöcher 36 definiert ist.

Diese Ruhestellung ist in Fig. 3 dargestellt.

Der Schlaghebel 46 wird seinerseits in dieser Ruhestellung dadurch gehalten, daß ein an seinem ersten Hebelarm gebildeter, zum Lagerblock 22 hin abstehender Ansatz 62 mit einer stufenförmigen Flache auf einer Haltefläche 64 am benachbarten Ende des Lagerblocks 22 aufliegt.

Um den Gurtstraffer bis zu seinem Einbau im Fahrzeug gegen unbeabsichtigte Auslösung zu sichern, ist eine Montagesicherung vorgesehen, welche den Kolben/Zylinder-Linearantrieb 18 in seiner in Fig. 3 gezeigten Ruhestellung arretiert, diese Arretierung jedoch automatisch aufhebt, wenn die aus Gurtaufroller und Gurtstraffer bestehende Baugruppe im Fahrzeug montiert wird. Diese Montagesicherung besteht aus einem Sicherungsteil 66 in Form eines zweiarmigen Hebels, der mittels einer Nabe auf einem Lagerstift 68 axial verschiebbar ist. Der Lagerstift 68 ist in einer Bohrung 70 der einen Seitenplatte des Stützgehäuses 32 befestigt. Die gegenüberliegende Seitenplatte des Stützgehäuses 32 weist eine Aussparung 72 auf, die so gestaltet ist, daß das Sicherungsteil 66 axial in den zwischen den beiden Seitenplatten des Stützteils 32 gebildeten Raum eingeführt werden kann. Das Sicherungsteil 66 weist an seinem einen Hebelarm einen Haken 74 auf, der einen entsprechenden, am Lagerblock 22 gebildeten Haken 76 hintergreift, um den Kolben/Zylinder-Linearantrieb in seiner Ruhestellung zu sichern. Durch eine Druckfeder 77 wird das Sicherungsteil 66 in seine Sicherungsstellung vorbelastet. Der zweite Hebelarm des Sicherungsteils 66 bildet einen Betätigungsansatz oder Taster 78, der aus dem Stützgehäuse 22 seitlich herausragt. Bei der Montage der aus Gurtaufroller 10 und Gurtstraffer 12 bestehenden Baugruppe am Fahrzeugaufbau kommt dieser Taster 78 mit der ihm gegenüberliegenden Fläche des Fahrzeugaufbaus in Eingriff, so daß das Sicherungsteil 66 entgegen der Wirkung der Druckfeder 77 axial verschoben wird, um den Haken 74 von dem Haken 76 zu lösen und den Kolben/Zylinder-Linearantrieb somit zu entsichern.

Der Gurtstraffer 12 wird im Fahrzeug in solcher Orientierung eingebaut, daß der Lagerblock 22 durch bei einer Fahrzeugverzögerung auftretende Trägheitskräfte bestrebt ist, aus der in Fig. 3 gezeigten Ruhestellung in Richtung einer Auslösestellung verschwenkt zu werden, die durch Anlage der Anschlagstifte 38 an den dem Boden des Lagerblocks 22 benachbarten Enden der Langlöcher 36 definiert ist. Die Fahrtrichtung ist in Fig. 3 durch einen Pfeil F angedeutet. Die Verschwenkung des Lagerblocks 22 mit dem darin befestigten Zylinder 26 erfolgt entgegen der Wirkung der Druckfeder 54, die ihn, wenn die Auslöseschwelle nicht erreicht wird, wieder in die Ruhestellung zurückdrückt. Bei der Verschwenkung des Lagerblocks 22 in Richtung der Auslösestellung gleitet die stufenförmige Fläche am Ende des Ansatzes 62 des Schlaghebels 46 über die Haltefläche 64 am Lagerblock 22. Sobald der Ansatz 62 sich über die Endkante der Haltefläche 64 hinausbewegt hat, ist der Schlaghebel 46 freigegeben. Er wird nun durch die Druckfeder 54 beschleunigt, so daß der Amboß 50 gegen das freie Ende des Schlagstiftes 40 getrieben wird, der sich nunmehr, nachdem der Gasgenerator 30 mit dem Lagerblock 22 zumindest annähernd in die in Fig. 5 gezeigte Auslösestellung verschwenkt wurde, dem Amboß 50 gegenüber befindet. Der Amboß 50 schlägt auf dem Schlagstift 40 auf und treibt diesen in den Schlagzünder hinein, wodurch der Gasgenerator 30 ausgelöst wird. Durch die Zündung des Gasgenerators 30 werden Gase freigesetzt, die durch die Kammer 28 im Lagerblock 22 in das untere Ende des Zylinders 26 einströmen und den Kolben 20 im Zylinder 26 hochtreiben, wobei das Zugseil 14 mitgenommen wird. Dieses versetzt die Seilscheibe 16 in Drehung, die selbsttätig mit der Gurtspule gekuppelt wird, um durch Drehung der Gurtspule die Gurtlose aus dem Sicherheitsgurtsystem herauszuziehen.

## Patentansprüche

1. Gurtstraffer in einem Sicherheitsgurtsystem für Fahrzeuge, mit einem durch einen pyrotechnischen Gasgenerator aktivierbaren Kolben/Zylinder-Linearantrieb, der in einem Stützgehäuse angeordnet ist, dadurch gekennzeichnet, daß der Kolben/Zylinder-Linearantrieb an dem Stützgehäuse (32) zwischen einer Ruhestellung und einer Auslösestellung verschwenkbar gelagert ist, daß der Kolben/Zylinder-Linearantrieb (18) eine fahrzeugsensitive Trägheitsmasse bildet, die durch Federvorspannung (54) in Richtung der Ruhestellung belastet und durch verzögerungsbedingte Trägheitskräfte in die Auslösestellung bewegbar ist, daß der Gasgenerator (30) mit einem Schlagzünder versehen ist und daß an dem Stützgehäuse (32) ein federbelastetes Schlagteil (46) gelagert ist, das einen Amboß (50) zum Aufschlagen auf dem Schlagzünder aufweist und durch Auflage an einer Haltefläche (64) des Kolben/Zylinder-Linearantriebs (18) in einer Bereitschaftsstellung gehalten ist.

2. Gurtstraffer nach Anspruch 1, dadurch gekennzeichnet, daß das Schlagteil als an dem Stützgehäuse (32) schwenkbar gelagerter zweiarmiger Schlaghebel (46) ausgebildet ist, an dessen erstem Arm der Amboß (50) angeordnet ist, und daß der Schlaghebel (46) durch Federkraft (54) im Sinne einer Bewegung des Ambosses (50) gegen den Schlagzünder vorbelastet ist.

3. Gurtstraffer nach Anspruch 2, dadurch gekennzeichnet, daß der Schlaghebel (46) an seinem ersten Arm neben dem Amboß (50) einen Ansatz (62) aufweist, mit dem er sich an der Haltefläche (64) des Kolben/Zylinder-Linearantriebs (18) abstützt.

4. Gurtstraffer nach Anspruch 2 oder 3, dadurch gekennzeichnet, daß die den Schlaghebel (46) vorbelastende Federkraft an seinem zweiten Hebelarm angreift.

5. Gurtstraffer nach Anspruch 4, dadurch gekennzeichnet, daß die Federkraft durch eine Druckfeder (54) erzeugt ist, die zwischen dem Ende des zweiten Hebelarms und dem Kolben/Zylinder-Linearantrieb (18) abgestützt ist.

6. Gurtstraffer nach Anspruch 5, dadurch gekennzeichnet, daß die Druckfeder (54) an dem Kolben/Zylinder-Linearantrieb (18) auf derjenigen Seite seines Schwenklagers (34) angreift, die von der Seite, an welcher der Schlagzünder angeordnet ist, abgewandt ist.

7. Gurtstraffer nach Anspruch 6, dadurch gekennzeichnet, daß die Druckfeder (54) sowohl den Schlaghebel (46) als auch den Kolben/Zylinder-Linearantrieb (18) belastet.

8. Gurtstraffer nach Anspruch 5, 6 oder 7, dadurch gekennzeichnet, daß die Druckfeder (54) sich auf der Seite des Kolben/Zylinder-Linearantriebs (18) über einen Stößel (58) an diesem abstützt, der ebenso wie die Druckfeder (54) in einer zylindrischen Hülse (56) geführt ist.

9. Gurtstraffer nach einem der vorstehenden Ansprüche, dadurch gekennzeichnet, daß der Schlagzünder versenkt am einen Ende des Gasgenerators (30) angeordnet ist.

10. Gurtstraffer nach einem der vorstehenden Ansprüche, dadurch gekennzeichnet, daß der Amboß (50) von einer am Schlagteil (46) gebildeten Schürze (52) umgeben ist, die das den Schlagzünder aufweisende Ende des Gasgenerators (30) schützend umgreift.

11. Gurtstraffer nach einem der vorstehenden Ansprüche, dadurch gekennzeichnet, daß der Kolben/Zylinder-Linearantrieb (18) durch eine Montagesicherung (66, 74, 76, 78) in seiner Ruhestellung arretierbar ist.

12. Gurtstraffer nach Anspruch 11, dadurch gekennzeichnet, daß die Montagesicherung durch ein auf einem Lagerstift (68) axial verschiebbares, mit einem am Kolben/Zylinder-Linearantrieb (18) angreifenden Haken (74) versehenes Sicherungsteil (66) gebildet ist, das einen aus dem Stützgehäuse (32) herausragenden Betätigungsansatz (78) aufweist.

13. Gurtstraffer nach einem der vorstehenden Ansprüche, dadurch gekennzeichnet, daß der Gasgenerator (30) mit einem seinem Schlagzünder vorgelagerten Schlagübertragungselement (40) versehen ist, welches in einer Führungsöffnung (42) im Gehäuse des Gasgenerators (30) zur Aufschlagfläche des Schlagzünders ausgerichtet aufgenommen und geführt ist, und daß dieses Schlagübertragungselement (40) aus dem Gehäuse des Gasgenerators (30) herausragt.

14. Gurtstraffer nach Anspruch 13, dadurch gekennzeichnet, daß das Schlagübertragungselement als Stift (40) oder Kugel ausgebildet ist.

## Claims

1. Belt tightener in a safety belt system for vehicles having a piston/cylinder linear drive which is activatable by a pyrotechnical gas generator which is arranged in a support housing, characterized in that the piston/cylinder linear drive is mounted oh the support housing (32) pivotally between a rest position and a triggered position, that the piston/cylinder linear drive (18) forms a vehicle-sensitive inertial mass which is loaded by spring bias (54) in the direction towards the rest position and is movable by deceleration-induced inertial forces into the triggered position, that the gas generator (30) is equipped with a percussion ignitor and that on the supporting housing (32) a spring-loaded striking member (46) is mounted which comprises an anvil (50) for striking on the percussion ignitor and is held in a readiness position by engagement on a holding surface (64) of the piston/cylinder linear drive (18).

2. Belt tightener according to claim 1, characterized in that the striking member is constructed as two-armed impact lever (46) which is pivotally mounted on the support housing (32) and on the first arm of which the anvil (50) is arranged, and that the impact lever (46) by spring force (54) is biased in the sense of a movement of the anvil (50) against the percussion ignitor.

3. Belt tightener according to claim 2, characterized in that the impact lever (46) comprises on its first arm adjacent the anvil (50) a lug (62) with which it bears on the holding surface (64) of the piston/cylinder linear drive (18).

4. Belt tightener according to claim 2 or 3, characterized in that the spring force biasing the impact lever (46) acts on the second lever arm thereof.

5. Belt tightener according to claim 4, characterized in that the spring force is generated by a pressure spring (54) which is supported between the end of the second lever arm and the piston/cylinder linear drive (18).

6. Belt tightener according to claim 5, characterized in that the pressure spring (54) engages on the piston/cylinder linear drive (18) on the side of the pivot bearing (34) thereof remote from the side on which the percussion ignitor is arranged.

7. Belt tightener according to claim 6, characterized in that the pressure spring (54) biases both the impact lever (46) and the piston/cylinder linear drive (18).

8. Belt tightener according to claim 5, 6 or 7, characterized in that the pressure spring (54) bears on the side of the piston/cylinder linear drive (18) via a ram (58) on the latter, said ram and said pressure spring (54) being guided in a cylindrical sleeve (56).

9. Belt tightener according to any one of the preceding claims, characterized in that the percussion ignitor is arranged countersunk at the one end of the gas generator (30).

10. Belt tightener according to any one of the preceding claims, characterized in that the anvil (50) is surrounded by a skirt (52) which is formed on the striking member (46) and which engages protectively round the end of the gas generator (30) having the percussion ignitor.

11. Belt tightener according to any one of the preceding claims, characterized in that the piston/cylinder linear drive (18) is arrestable in its rest position by an assembly securing means (66, 74, 76, 78).

12. Belt tightener according to claim 11, characterized in that the assembly securing means is formed by a securing member (66) which is axially displaceable on a bearing pin (68), provided with a hook (74) engaging the piston/cylinder linear drive (18) and comprises an actuating lug (78) projecting out of the support housing (32).

13. Belt tightener according to any one of the preceding claims, characterized in that the gas generator (30) is provided with an impact transmission element (40) which is arranged in front of the percussion ignitor thereof and which is received and guided in a guide opening (42) in the housing of the gas generator (30) in alignment with the impact surface of the percussion ignitor and that said impact transmission element (40) projects out of the housing of the gas generator.

14. Belt tightener according to claim 13, characterized in that the impact transmission element is constructed as pin (40) or ball.

## Revendications

1. Tendeur d'un système de ceinture de sécurité pour véhicules, comprenant une commande linéaire à piston/cylindre déclenchable par un générateur pyrotechnique de gaz et disposée dans un boîtier d'appui, caractérisé en ce que la commande linéaire à piston/cylindre est montée oscillante sur le boîtier d'appui (32) entre une position de repos et une position de déclenchement, en ce que la commande linéaire à piston/cylindre (18) forme une masse d'inertie sensible au véhicule, soumise à l'effort d'une précontrainte élastique (54) dans le sens de la position de repos et déplaçable vers la position de déclenchement par une force d'inertie due à une décélération, en ce que le générateur de gaz (30) est équipé d'une amorce à percussion et en ce qu'un élément de percussion (46) soumis à un effort élastique est monté dans le boîtier d'appui (32), comprend une masselotte (50) destinée à heurter l'amorce à percussion et est retenu à une position d'attente par appui sur une surface de retenue (64) de la commande linéaire à piston/cylindre (18).

2. Tendeur de ceinture selon la revendication 1, caractérisé en ce que l'élément de percussion est conformé en levier (46) de percussion à deux bras monté oscillant sur le boîtier d'appui (32) et sur le premier bras duquel est disposée la masselotte (50) et en ce que le levier de percussion (46) est soumis à une précontrainte par une force élastique (54) en vue d'un mouvement de la masselotte (50) vers l'amorce à percussion.

3. Tendeur de ceinture selon la revendication 2, caractérisé en ce que le levier de percussion (46) comprend sur son premier bras, à côté de la masselotte (50), un talon (62) par lequel il prend appui sur la surface de retenue (64) de la commande linéaire à piston/cylindre (18).

4. Tendeur de ceinture selon la revendication 2 ou 3, caractérisé en ce que la force élastique mettant sous précontrainte le levier de percussion (46) est appliquée à son second bras de levier.

5. Tendeur de ceinture selon la revendication 4, caractérisé en ce que la force élastique est produite par un ressort de compression (54) qui prend appui entre l'extrémité du second bras de levier et la commande linéaire à piston/cylindre (18).

6. Tendeur de ceinture selon la revendication 5, caractérisé en ce que le ressort de compression (54) est appliquée à la commande linéaire à piston/cylindre (18) sur le côté de son support d'oscillation (34) qui est tourné à l'opposé du côté sur lequel l'amorce à percussion est disposée.

7. Tendeur de ceinture selon la revendication 6, caractérisé en ce que le ressort de compression (54) exerce son effort aussi bien sur le levier de percussion (46) que sur la commande linéaire à piston/cylindre (18).

8. Tendeur de ceinture selon la revendication 5, 6 ou 7, caractérisé en ce que le ressort de compression (54) prend appui sur le côté de la commande linéaire à piston/cylindre (18) contre cette dernière par un poussoir (58) qui est guidé comme le ressort de compression (54) dans un manchon cylindrique (56).

9. Tendeur de ceinture selon l'une des revendications précédentes, caractérisé en ce que l'amorce à percussion est disposée de manière à être noyée dans une extrémité du générateur de gaz (30).

10. Tendeur de ceinture selon l'une des revendications précédentes, caractérisé en ce que la masselotte (50) est entourée d'un tablier (52) réalisé sur l'élément de percussion (46), lequel tablier entoure l'extrémité du générateur de gaz (30) comportant l'amorce à percussion en la protégeant.

11. Tendeur de ceinture selon l'une des revendications précédentes, caractérisé en ce que la commande linéaire à piston/cylindre (18) est blocable à sa position de repos par un dispositif de sécurité (66, 74, 76, 78) prévu pour le montage.

12. Tendeur de ceinture selon la revendication 11, caractérisé en ce que le dispositif de sécurité prévu pour le montage est formé d'un élément de sécurité (66) déplaçable axialement sur une cheville de support (68), comportant un crochet (74) qui est appliqué à la commande linéaire à piston/cylindre (18) et comprenant un talon d'actionnement (78) qui déborde du boîtier d'appui (32).

13. Tendeur de ceinture selon l'une des revendications précédentes, caractérisé en ce que le générateur de gaz (30) est équipé d'un élément (40) de transmission de la percussion qui est monté en amont de son amorce à percussion, lequel est logé et guidé dans un trou de guidage (42) du boîtier du générateur de gaz (30) et qui est orienté vers la surface de l'amorce à percussion qui reçoit le choc, et en ce que cet élément (40) de transmission de la percussion déborde du boîtier du générateur de gaz (30).

14. Tendeur de ceinture selon la revendication 13, caractérisé en ce que l'élément de transmission de la percussion est conformé en tige (40) ou en bille.
